# EUROPEAN PATENT APPLICATION

(11) **EP 4 040 332 A1**
(43) Date of publication of application: **10.08.2022**
(21) Application number: 20835645.1
(22) Date of filing: 03.07.2020
(51) Int. Cl.: G06K 9/00

(54) **METHOD AND APPARATUS FOR UPGRADING AN INTELLIGENT MODEL AND NON-TRANSITORY COMPUTER READABLE STORAGE MEDIUM**

(30) Priority: 04.07.2019 CN 201910600514
(71) Applicant: Hangzhou Hikvision Digital Technology Co., Ltd., Hangzhou, Zhejiang 310051 (CN)
(72) Inventor: GUO, Jietian, Hangzhou, Zhejiang 310051 (CN)
(74) Representative: Yang, Shu
(86) International application number: PCT/CN2020/100250
(87) International publication number: WO 2021/000956

(57) **Abstract**

A method and apparatus (300) for upgrading an intelligent model are provided, belonging to the field of intelligent analysis. The method includes: acquiring input data belonging to a first domain, wherein the first domain is different from a second domain of a first intelligent model to be upgraded, and the first intelligent model is obtained through training based on first sample data which belongs to the second domain (101); inputting the input data to the first intelligent model, and acquiring output data corresponding to the input data, wherein the output data is outputted by the first intelligent model from processing the input data, and the output data includes a confidence value and target box information (102); and training the first intelligent model according to the first sample data and the output data to obtain a second intelligent model (103). The present application can improve the domain generalization performance of an intelligent model.

## Description

### CROSS-REFERENCE TO RELATED APPLICATION

The present application claims priority to Chinese Patent Application No. 201910600514.3 filed on July 4, 2019 and entitled "METHOD AND APPARATUS FOR UPGRADING INTELLIGENT MODEL", the entire contents of which are incorporated herein by reference.

### TECHNICAL FIELD

The present application relates to the field of intelligent analysis, and in particular, to a method and apparatus for upgrading an intelligent model.

### BACKGROUND

Intelligent models are obtained by training deep learning algorithms. For example, a vehicle detection model is obtained by training a deep learning algorithm with a large number of training samples. There are two types of training samples. One type of training samples includes vehicle images and annotation information obtained through manual annotation. The annotation information may be "yes". The other type of training samples includes non-vehicle images and annotation information obtained through manual annotation, and the annotation information may be "no". The vehicle detection model obtained by training can detect whether images captured by a camera include vehicle images or not.

The intelligent model trained in a certain domain is usually only applied to this domain. If the intelligent model is applied to a new domain, the performance of the intelligent model will be degraded. For example, the training samples used to train the vehicle detection model are training samples in a first domain, and the vehicle detection model achieves high performance when detecting, in the first domain, whether images captured by a camera include vehicle images or not, thereby achieving high accuracy of the vehicle detection model in detecting vehicle images.

However, when the vehicle detection model continues to be used in a second domain different from the first domain to detect images captured by a camera, the vehicle detection model may fail to detect vehicle images. The domain generalization performance of the vehicle detection model is degraded, resulting in a decrease in the accuracy of the vehicle image detection.

### SUMMARY

The present application provides a method and apparatus for upgrading an intelligent model, to improve the domain generalization performance of the intelligent model. The technical solutions are as follows.

According to an aspect, the present application provides a method for upgrading an intelligent model, applied to a first device, the method including:
acquiring input data belonging to a first domain, wherein the first domain is different from a second domain of a first intelligent model to be upgraded, and the first intelligent model is obtained through training based on first sample data which belongs to the second domain;
inputting the input data to the first intelligent model, and acquiring output data corresponding to the input data, wherein the output data is outputted by the first intelligent model from processing the input data, and the output data includes a confidence value and target box information; and
training the first intelligent model according to the first sample data and the output data to obtain a second intelligent model.

Optionally, training the first intelligent model according to the first sample data and the output data to obtain a second intelligent model includes:
setting, according to the output data, annotation information in the input data corresponding to the output data, to obtain second sample data which belongs to the first domain, wherein the annotation information is used to indicate whether a target in each piece of the input data is a real target; and
training the first intelligent model according to the second sample data and the first sample data to obtain the second intelligent model.

Optionally, the setting, by the first device according to the output data, annotation information in the input data corresponding to the output data includes:
calculating value scores of the output data according to the output data, wherein each of the value scores is used to indicate a degree of suitability of using a piece of the input data corresponding to a piece of the output data as a piece of the second sample data;
selecting, according to each of the value scores of the output data, output data meeting a preset condition from all the output data; and
setting, according to the selected output data, annotation information in the input data corresponding to the selected output data.

Optionally, after setting, according to the output data, annotation information in the input data corresponding to the output data, the method further includes:
displaying the second sample data, and in response to detecting a correction operation performed by a user on the annotation information in the second sample data, correcting the annotation information according to the correction operation.

Optionally, training the first intelligent model according to the second sample data and the first sample data to obtain the second intelligent model includes:
training the first intelligent model according to the second sample data, the output data corresponding to the second sample data, and the first sample data to obtain the second intelligent model.

Optionally, before the inputting the input data to the first intelligent model, the method further includes:
receiving input data sent by a second device and belonging to the first domain, wherein the input data is captured by the second device.

Optionally, after training the first intelligent model according to the first sample data and the output data to obtain a second intelligent model, the method further includes:
sending the second intelligent model to a second device, such that the second device upgrades the first intelligent model installed in the second device to the second intelligent model.

According to another aspect, the present application provides an apparatus for upgrading an intelligent model, the apparatus including:
a first acquiring module, configured to acquire input data belonging to a first domain, wherein the first domain is different from a second domain to which a first intelligent model to be upgraded is applied, and the first intelligent model is obtained through training based on first sample data which belongs to the second domain;
a second acquiring module, configured to input the input data to the first intelligent model, and acquire output data corresponding to the input data, wherein the output data is outputted by the first intelligent model from processing the input data, and the output data includes a confidence value and target box information; and
a training module, configured to train the first intelligent model according to the first sample data and the output data to obtain a second intelligent model.

Optionally, the training module specifically includes:
a setting unit, configured to set, according to the output data, annotation information in the input data corresponding to the output data, to obtain second sample data which belongs to the first domain, wherein the annotation information is used to indicate whether a target in each piece of the input data is a real target; and
a training unit, configured to train the first intelligent model according to the second sample data and the first sample data to obtain the second intelligent model.

Optionally, the setting unit is configured to:
calculate value scores of the output data according to the output data, wherein each of the value scores is used to indicate a degree of suitability of using a piece of the input data corresponding to a piece of the output data as a piece of the second sample data;
select, according to each of the value scores of the output data, output data meeting a preset condition from all the output data; and
set, according to the selected output data, annotation information in the input data corresponding to the selected output data.

Optionally, the apparatus further includes:
a correction module, configured to display the second sample data, and in response to detecting a correction operation performed by a user on the annotation information in the second sample data, correct the annotation information according to the correction operation.

Optionally, the training unit is configured to:
train the first intelligent model according to the second sample data, the output data corresponding to the second sample data, and the first sample data to obtain the second intelligent model.

Optionally, the apparatus further includes:
a receiving module, configured to receive input data sent by a second device and belonging to the first domain, wherein the input data is captured by the second device.

Optionally, the apparatus further includes:
a sending module, configured to send the second intelligent model to a second device, such that the second device upgrades the first intelligent model installed in the second device to the second intelligent model.

According to another aspect, the present application provides an electronic device, including:
a processor; and
a memory configured to store instructions executable by the processor;
wherein the processor is configured to execute the executable instructions to implement instructions of the foregoing method for upgrading an intelligent model.

According to another aspect, the present application provides a computer readable storage medium storing a computer program, wherein the computer program is loaded and executed by a processor to implement instructions of the foregoing method for upgrading an intelligent model.

The technical solutions provided in the embodiments of the present application achieve the following beneficial effects:

By acquiring output data that is outputted by the first intelligent model from processing the input data belonging to the first domain, and training the first intelligent model according to the first sample data and each piece of output data to obtain the second intelligent model, the second intelligent model is applicable to the first domain, thus improving the domain generalization performance of the second intelligent model.

It should be understood that the above general description and the detailed description in the following text are only exemplary and explanatory, and should not be construed as a limitation to the present application.

### BRIEF DESCRIPTION OF THE DRAWINGS

The accompanying drawings, which are incorporated in and constitute a part of this description, illustrate the embodiments of the present application and together with the description, serve to explain the principles of the present application.
FIG. 1 is a flowchart of a method for upgrading an intelligent model according to an embodiment of the present application;
FIG. 2 is a flowchart of another method for upgrading an intelligent model according to an embodiment of the present application;
FIG. 3 is a schematic diagram of a system architecture according to an embodiment of the present application;
FIG. 4 is a schematic diagram of another system architecture according to an embodiment of the present application;
FIG. 5 is a schematic structural diagram of an apparatus for upgrading an intelligent model according to an embodiment of the present application; and
FIG. 6 is a schematic structural diagram of a terminal according to an embodiment of the present application.

The above accompanying drawings show the explicit embodiments of the present application, which will be described below in detail. These accompanying drawings and texts are not intended to limit a conception scope of the present application but to illustrate the concept of the present application to a person skilled in the art with reference to the specific embodiments.

### DETAILED DESCRIPTION

The exemplary embodiments will be described in detail here and the embodiments are shown in the accompanying drawings. When the following description involves in the accompanying drawings, unless otherwise specified, the same numeral in different accompanying drawings represents the same or similar elements. The implementation manners described in the following exemplary embodiments do not represent all implementation manners consistent with the present application. On the contrary, they are only embodiments of an apparatus and a method detailed in the appended claims and consistent with some aspects of the present application.

An intelligent model is obtained by training a machine learning algorithm. The machine learning algorithm may be a deep learning algorithm or the like, such as a convolutional neural network. For example, the intelligent model may be at least one of a vehicle detection model or an object detection model, etc. During training of a machine learning algorithm, first sample data which belongs to a second domain is generally used to train the deep learning algorithm, such that the trained intelligent model can process input data belonging to the second domain.

For example, in a first instance of training a vehicle detection model, it is assumed that the input data belonging to the second domain are images captured in 2018. Therefore, the trained vehicle detection model is used to detect images of vehicles that have appeared on the market by 2018. The vehicle detection model is obtained by training the deep learning algorithm using the first sample data which belongs to the second domain, wherein the second domain is the vehicles that have appeared on the market by 2018. The first sample data is image data, including two types; one type of first sample data includes vehicle images of vehicles that have appeared on the market by 2018 and annotation information, wherein the annotation information may be "yes", and the vehicle images in this type of first sample data are manually annotated. Another type of first sample data includes non-vehicle images and annotation information that may be "no". Images in the other type of first sample data may be at least one of building images or animal images. A vehicle detection model for detecting vehicle images can be obtained by training the machine learning algorithm with the first sample data.

The second instance is still about training a vehicle detection model. Assuming that the input data belonging to the second domain are images captured during the daytime, i.e., the second domain is a daytime domain, the trained vehicle detection model is used to detect vehicle images during the daytime. The vehicle detection model is obtained by training the deep learning algorithm using the first sample data which belongs to the second domain. The first sample data is image data, including two types; one type of first sample data includes vehicle images captured in the daytime and annotation information, wherein the annotation information may be "yes", and the vehicle images in this type of first sample data are manually annotated. Another type of first sample data includes non-vehicle images and annotation information that may be "no". Images in the other type of first sample data may be at least one of building images or animal images. A vehicle detection model for detecting vehicle images in the daytime can be obtained by training the machine learning algorithm with the first sample data.

When a camera is installed with the vehicle detection model, the camera captures images and inputs the captured images to the vehicle detection model as input data of the second domain. The vehicle detection model processes the input data to obtain output data corresponding to the input data. The output data may include a confidence value and target box information, and the target box information includes a target box position and a target box size. Based on the confidence value, it can be determined whether an image, in the input data, located in a target box corresponding to the target box information is a vehicle image.

Although the intelligent model is used to process the input data belonging to the second domain, the intelligent model sometimes is also used to process data belonging to a new domain. For ease of illustration, the new domain is referred to as a first domain, i.e., the intelligent model is applied to the first domain. When the intelligent model is applied to the first domain, the performance of the intelligent model may be degraded, resulting in a possible decrease of the accuracy of the processing result outputted by the intelligent model when the intelligent model processes input data belonging to the first domain.

For example, when the vehicle detection model trained in 2018 continues to be used in 2020 in the first instance described above to detect vehicle images of vehicles that have appeared on the market by 2020, the vehicle detection model may not be able to detect vehicle images of new vehicles appearing on the market from 2018 to 2020. The performance of the vehicle detection model may be degraded, and the accuracy of the vehicle detection model in detecting vehicle images also decreases. The first domain is vehicles that have appeared on the market by 2020.

For example, in the second instance above, when the vehicle detection model continues to be used in the dark to detect vehicle images of vehicles, since the second domain to which the first sample data for training the vehicle detection model belongs is a daytime domain, the vehicle detection model may not be able to detect the vehicle images of vehicles in the dark. The performance of the vehicle detection model decreases, and the accuracy of the vehicle detection model in detecting the vehicle images also decreases. The dark domain is the first domain.

In order to make the intelligent model applicable to the first domain, the present application can automatically upgrade the intelligent model by any of the following embodiments, such that the performance of the upgraded intelligent model is not degraded when being applied to the first domain, and the upgraded intelligent model is used to process input data of the first domain, to improve the accuracy of processing the input data of the first domain.

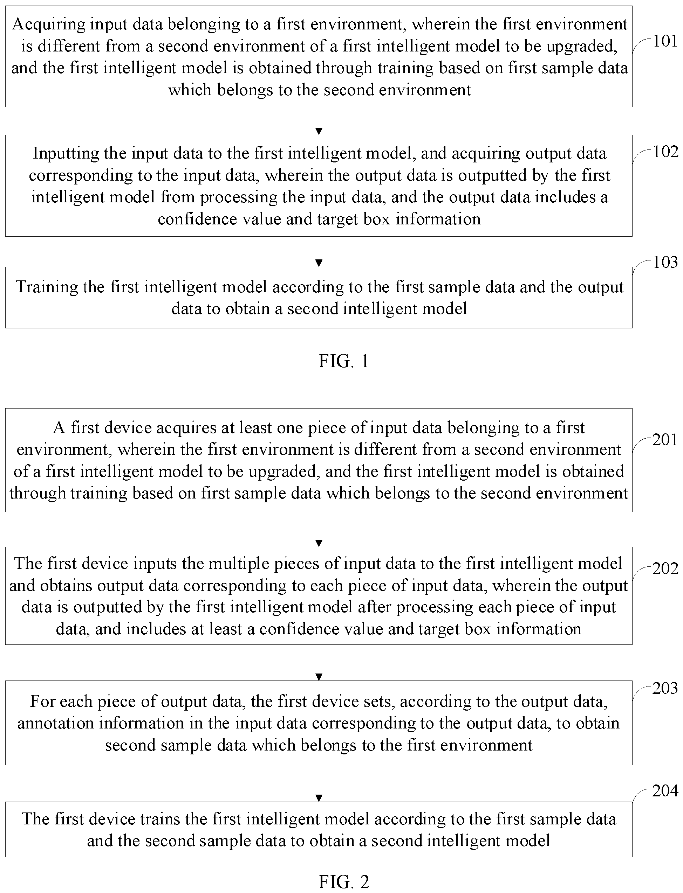

Referring to FIG. 1, an embodiment of the present application provides a method for upgrading an intelligent model according to an embodiment of the present application. The upgrading method may be online upgrading or offline upgrading, and is applied to a first device. The method includes the following steps:

In 101, input data belonging to a first domain is acquired, wherein the first domain is different from a second domain of a first intelligent model to be upgraded, and the first intelligent model is obtained through training based on first sample data which belongs to the second domain.

In 102, the input data is inputted to the first intelligent model, and output data corresponding to the input data is acquired, wherein the output data is outputted by the first intelligent model from processing the input data, and the output data includes a confidence value and target box information.

Optionally, the output data further includes category information. For example, the category information is a vehicle, a building, a commodity or an animal.

In 103, the first intelligent model is trained according to the first sample data and the output data to obtain a second intelligent model.

In the embodiments of the present application, by acquiring output data that is outputted by the first intelligent model from processing the input data belonging to the first domain, and training the first intelligent model according to the first sample data and each piece of output data to obtain the second intelligent model, the second intelligent model is applicable to the first domain, thus improving the domain generalization performance of the second intelligent model.

Referring to FIG. 2, an embodiment of the present application provides a method for upgrading an intelligent model according to an embodiment of the present application. The upgrading method may be online upgrading or offline upgrading. The method includes the following steps:

In 201, a first device acquires at least one piece of input data belonging to a first domain, wherein the first domain is different from a second domain of a first intelligent model to be upgraded, and the first intelligent model is obtained through training based on first sample data which belongs to the second domain.

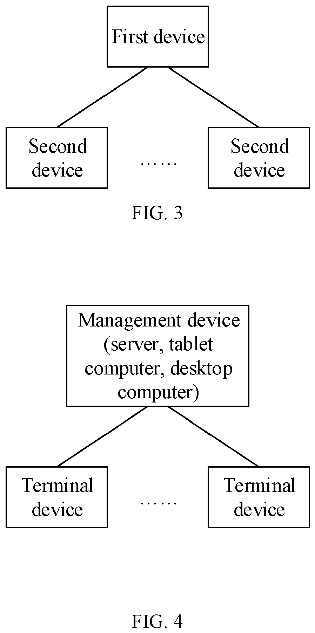

The first device may be a camera, a server, a desktop computer or a tablet computer, etc. The first device may be installed with the first intelligent model, and the first device may or may not form a network with other devices. Referring to FIG. 3, the first device may form a network with at least one second device, and the second device may be installed with the first intelligent model. In such a case, the first device and the second device may be devices such as cameras. The first device may capture at least one piece of input data belonging to the first domain. In the case where the first device and the second device form a network, the first device may also receive at least one piece of input data, captured by the second device, belonging to the first domain. When the first device and the second device are cameras, the input data captured by the first device is image data, and the input data captured by the second device is image data.

Referring to FIG. 4, a management device and at least one terminal device form a network. The management device may be a server, a desktop computer or a tablet computer, and may store the first intelligent model. The terminal device may be a camera or the like, and is installed with the first intelligent model. The first device may be an terminal device or may be a management device. When the first device is a management device, the second device is at least one terminal device. The second device captures input data of the first domain and sends the input data to the first device; the first device receives the input data. When the first device is an terminal device, the second device may be another terminal device, and the first device may capture input data or receive input data sent by the second device.

The input data may be, for example, image data. For example, in the first instance, the first intelligent model to be upgraded is a vehicle detection model for detecting vehicle images, the first intelligent model is an intelligent model trained in 2018, and the first device installed with the vehicle detection model is a first camera, that is, the input data belonging to the second domain is images captured by the first camera in 2018. The vehicle detection model continues to be used in 2020 to detect vehicle images of vehicles that have appeared on the market by 2020, that is, the input data belonging to the first domain is images captured by the first camera in 2020. The first camera captures image data that includes images of vehicles have appeared on the market by 2020. In this case, the image data captured by the first camera is the input data belonging to the first domain. Assuming that there is a second camera installed with a vehicle detection model to be upgraded, the second camera captures image data including images of vehicles appearing on the market in 2020, and then sends the captured image data to the first camera. The first camera receives the image data and merges the received image data with captured image data to form multiple pieces of input data belonging to the first domain.

In the second instance, the first intelligent model to be upgraded is the vehicle detection model for detecting vehicle images, the second domain to which the first sample data for training the first intelligent model belongs is the daytime domain, and the first device installed with the vehicle detection model is the first camera, that is, the input data belonging to the second domain is images captured by the first camera during the daytime. The vehicle detection model continues to be used in the dark to detect vehicle images of vehicles, that is, the input data belonging to the first domain is images captured by the first camera in the dark. The first camera captures the image data including vehicle images in the dark. In this case, the image data captured by the first camera is the input data belonging to the first domain, and the first domain is the dark domain. Assuming that there is a second camera installed with a vehicle detection model to be upgraded, the second camera captures image data including vehicle images captured in the dark, and then sends the captured image data to the first camera. The first camera receives the image data and merges the received image data with captured image data to form multiple pieces of input data belonging to the first domain.

In 202, the first device inputs the multiple pieces of input data to the first intelligent model and obtains output data corresponding to each piece of input data, wherein the output data is outputted by the first intelligent model after processing each piece of input data, and includes at least a confidence value and target box information.

For each piece of input data inputted to the first intelligent model, the first intelligent model processes the input data and outputs the output data corresponding to the input data. The output data is substantially a processing result obtained by the first intelligent model by processing the input data. The output data includes a confidence value and target box information.

Optionally, the target box information may include a target box position and a target box size, and the output data may also include at least one feature such as a data category, a high-level semantic feature, time, a point position, or a description.

Optionally, the output data further includes category information. For example, the category information is a vehicle, a building, a commodity or an animal.

The confidence value is obtained by the first intelligent model based on the high-level semantic feature.

For example, in the first instance or the second instance described above, the first camera inputs the image data belonging to the first domain to the vehicle detection model, and the vehicle detection model detects each piece of inputted image data and outputs output data corresponding to each piece of image data. For any piece of image data, the output data includes a confidence value and target box information, and the target box information includes a target box position and a target box size. A target box can be determined based on the target box position and the target box size in the image data, and an image bounded by the target box is a vehicle image detected by the vehicle detection model, and the confidence value indicates a probability of the detected vehicle image being a real vehicle image.

In 203, for each piece of output data, the first device sets, according to the output data, annotation information in the input data corresponding to the output data, to obtain second sample data which belongs to the first domain.

The annotation information may be "yes" or "no", and if the annotation information in the second sample data is "yes", it indicates that the target image bounded by the target box in the second sample data is a real target. If the annotation information in the second sample data is "no", it indicates that the target image bounded by the target box in the second sample data is not a real target.

This step can be implemented by the operations 2031 to 2033, which are as follows:

In 2031, the first device calculates a value score of each piece of output data according to the output data, wherein each of the value scores is used to indicate a degree of suitability of using a piece of the input data corresponding to a piece of the output data as a piece of the second sample data.

The first device may be installed with an intelligent analysis model for calculating values. The first device may input the output data to the intelligent analysis model, and the intelligent analysis model calculates the value score of the output data according to the confidence value and the target box information in the output data.

The intelligent analysis model is obtained by training an algorithm such as a deep learning algorithm in advance. For example, the intelligent analysis model is obtained by training an algorithm such as a convolutional neural network in advance. Multiple training samples may be set in advance. Each training sample includes the output data outputted by the intelligent module and a value score obtained by manually labeling the output data. The training sample is fed into the deep learning algorithm and then training of the deep learning algorithm is started. The training process is as follows:

The deep learning algorithm calculates a value score of the output data according to the output data, compares the calculated value score with the value score manually labeled for the output data, to obtain a score difference, and adjusts parameters of the deep learning algorithm based on the score difference. The above training process is repeated to obtain the intelligent analysis model.

If the confidence value included in the output data is lower, the output data outputted by the intelligent analysis model is likely to have a higher value score. Conversely, if the confidence value included in the output data is higher, the output data outputted by the intelligent analysis network may have a lower value score.

In 2032, the first device selects, according to each of the value scores of the output data, output data meeting a preset condition from all the output data.

The first device may select, from all the output data, output data with value scores exceeding a predetermined score threshold, or the first device may select, from all the output data, a predetermined number of pieces of output data with highest value scores.

Optionally, the output data may also include data categories, and the output data may be categorized according to the data category included in each piece of output data. For any data category, a predetermined number of pieces of output data satisfying a predetermined condition are selected from all the output data corresponding to the data category based on each of the value scores of the output data. In this way, the output data of each data category can be selected in a balanced manner.

In 2033, for each piece of selected output data, the first device sets, according to the output data, the annotation information in the input data corresponding to the output data, to obtain the second sample data which belongs to the first domain.

Each piece of selected output data includes a confidence value and target box information, and the target box information may include a target box position and a target box size. A target box is determined in the input data corresponding to the output data according to the target box information in the output data. Based on the confidence value, it is determined whether the target bounded by the target box is a real target, and annotation information is set for the target according to the result of determination.

When the confidence value exceeds a preset confidence threshold, it is determined that the target bounded by the target box in the input data is a real target, and the annotation information set for the target is "yes". The annotation information "yes" is used to indicate that the target is a real target. When the confidence value does not exceed the preset confidence threshold, it is determined that the target bounded by the target box in the input data is not a real target, and the annotation information set for the target is "no". The annotation information "no" is used to indicate that the target is not a real target.

For example, in the first instance described above, the first intelligent model is a vehicle detection model, the input data corresponding to each piece of output data is image data, and the image data is image data captured in 2020. For each piece of output data, a target box is determined in the image data corresponding to the output data according to the target box information included in the output data, whether the target bounded by the target box is a vehicle image is determined according to the confidence value, and annotation information is set for the target according to the result of determination, to obtain second sample data in the first domain, i.e., second sample data in 2020.

For example, in the second instance described above, the first intelligent model is a vehicle detection model, the input data corresponding to each piece of output data is image data, and the image data is image data captured in the dark. For each piece of output data, a target box is determined in the image data corresponding to the output data according to the target box information included in the output data, whether the target bounded by the target box is a vehicle image is determined according to the confidence value, and annotation information is set for the target according to the result of determination, to obtain second sample data in the first domain, i.e., second sample data in the dark domain.

The annotation information set in the second sample data may be incorrect, that is, the target in the second sample data may not be the real target, but the annotation information is "yes"; alternatively, the target in the second sample data may be the real target, but the annotation information is "no".

In order to improve the accuracy of setting the annotation information to improve the accuracy of the second sample data, the second sample data may be displayed for the user to confirm. If the user confirms that the annotation information in the second sample data is incorrect, the user can correct the annotation information in the second sample data.

During implementation, the second sample data is displayed, and when a correction operation of the user on the annotation information in the second sample data is detected, the annotation information in the second sample data is corrected according to the correction operation.

When the second sample data is displayed, a correction button may also be displayed. If the user finds that the annotation information in the second sample data is incorrect, the user can click the correction button to trigger the correction operation. In a case that the annotation information in the second sample data is "yes", the annotation information in the second sample data is changed to "no". In a case that the annotation information in the second sample data is "no", the annotation information in the second sample data is changed to "yes".

In 204, the first device trains the first intelligent model according to the first sample data and the second sample data to obtain a second intelligent model.

The first intelligent model is obtained by training a robot learning algorithm using the first sample data which belongs to the second domain. The first sample data is obtained by manual annotation, and the first sample data can be stored after the first intelligent model is trained using the first sample data. The first sample data can be stored in the server or directly in the first device.

If the first sample data is stored in the server, the first device can download the first sample data from the server; if the first sample data is stored in the first device, the first device can directly access the stored first sample data.

When the first sample data is stored, a version number of the first intelligent model may also be stored, i.e., there may be a correspondence between the first sample data and the version number of the first intelligent model. In the correspondence, the first sample data corresponding to the version number of the first intelligent model may be image data, or may be high-level semantic features obtained by converting the image data by the first intelligent model. Since the correspondence may be installed on different devices together with the first intelligent model, the first sample data corresponding to the version number of the first intelligent model in the correspondence is in the form of high-level semantic features to protect privacy.

In this step, the corresponding first sample data is queried from the correspondence according to the version number of the first intelligent model, and the second intelligent model is obtained by training the first intelligent model according to the queried first sample data and the second sample data.

If the corresponding first sample data is not found in the correspondence, an error prompt may be provided. Alternatively, a version number may be determined, which is lower than the version number of the first intelligent model, and the corresponding first sample data is queried from the correspondence according to the determined version number. The queried first sample data is inputted to a conversion model, which is used to convert the inputted first sample data into the first sample data corresponding to the version number of the first intelligent model. The first sample data corresponding to the version number of the first intelligent model outputted by the conversion model is obtained, and the second intelligent model is obtained by training the first intelligent model based on the obtained first sample data and the second sample data.

Optionally, the determined version number is a version number with the smallest difference from the version number of the first intelligent model.

The conversion model is obtained by training a deep learning algorithm with training data in advance. The training data includes sample data corresponding to a first version number and sample data corresponding to a second version number, the first version number being smaller than the second version number. The training data is fed to the deep learning algorithm. The deep learning algorithm converts the sample data corresponding to the first version number to obtain the sample data corresponding to the second version number. The deep learning algorithm adjusts parameters thereof according to the converted sample data corresponding to the second version number and the inputted sample data corresponding to the second version number. By repeating the foregoing process, the deep learning algorithm continuously adjusts the parameters thereof. The deep learning algorithm obtained after the training is stopped is the conversion model.

The first device inputs the first sample data and the second sample data to the first intelligent model, and the first intelligent model is trained according to the first sample data and the second sample data. The training process is as follows:
The first intelligent model uses both the first sample data and the second sample data as sample data. For each piece of sample data, the first intelligent model detects a target in the sample data according to the sample data, compares the detected target with the annotation information in the sample data to obtain difference information, and adjusts parameters of the first intelligent model according to the difference information. The above training process is repeated to obtain the second intelligent model.

Optionally, the first sample data, the output data corresponding to the second sample data, and the second sample data may be inputted to the first intelligent model, such that the first intelligent model is trained according to the second sample data, the output data corresponding to the second sample data, and the first sample data, to obtain the second intelligent model.

In a case that the first device is installed with the first intelligent model, the first device may upgrade the installed first intelligent model to the second intelligent model.

The first device may further send the first intelligent model to the second device, and the second device can also upgrade the installed first intelligent model to the second intelligent model.

For example, in the first instance described above, the first sample data of the year 2018, the output data corresponding to the second sample data of the year 2020, and the second sample data are inputted to the first intelligent model, such that the first intelligent model is trained according to the second sample data of the year 2020, the output data corresponding to the second sample data of the year 2020, and the first sample data of the year 2018, to obtain the second intelligent model. The second intelligent model obtained through training improves the accuracy of detecting vehicle images of vehicles that have appeared on the market by 2020.

In the second instance described above, the first sample data in the daytime domain, the output data corresponding to the second sample data in the dark domain, and the second sample data in the dark domain are inputted to the first intelligent model, such that the first intelligent model is trained according to the second sample data in the dark domain, the output data corresponding to the second sample data in the dark domain, and the first sample data in the daytime domain, to obtain the second intelligent model. The second intelligent model obtained through training improves the accuracy of detecting vehicle images in the dark domain.

Optionally, for the scenario shown in FIG. 3, the first device and each second device can obtain the second intelligent model by using the method described above. Alternatively, for the scenario shown in FIG. 3, the management device and each terminal device can obtain the second intelligent model by using the method described above.

For any of the devices (which may be a first device, a second device, a management device, or an terminal device), multiple pieces of test data may be set in that device in advance. For each piece of test data, the test data includes input data belonging to the first domain and output data corresponding to the input data. The device may input the input data included in each piece of test data to the second intelligent model, and obtain output data, outputted by the second intelligent model, corresponding to each piece of input data included in each piece of test data. The accuracy is obtained according to the output data included in each piece of test data and the output data corresponding to the input data included in each piece of test data.

The device may send the accuracy to other devices, and receive accuracy sent by the other devices. If the accuracy obtained by the device is greater than the accuracy sent by each of the other devices, the device upgrades the installed first intelligent model to a second intelligent model obtained by the device itself, and sends the second intelligent model to each of the other devices. Each of the other devices receives the second intelligent model, upgrades the installed first intelligent model to the received second intelligent model.

If the accuracy obtained by the device is less than the accuracy sent by one or more of the other devices, the device receives the second intelligent model sent by one of the other devices which has the highest accuracy, and upgrades the installed first intelligent model to the received second intelligent model.

In the embodiments of the present application, output data outputted by a first intelligent model after processing input data belonging to a first domain is obtained, and according to each piece of output data, annotation information is set in the input data corresponding to each piece of output data, to obtain second sample data which belongs to the first domain. The first intelligent model is trained according to the second sample data and the first sample data to obtain a second intelligent model. The second intelligent model is applicable to the first domain, thereby improving the performance of the second intelligent model. The first intelligent model can be automatically upgraded, thus reducing labor resources, improving upgrade efficiency, and improving the domain adaptability of the intelligent model to domains.

The following is an example of an apparatus embodiment of the present application, which can be used to perform the method embodiment of the present application. For details not disclosed in the apparatus device of the present application, refer to the method embodiment of the present application.

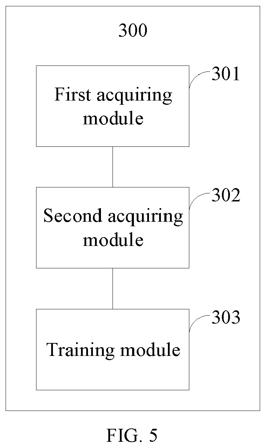

Referring to FIG. 5, an embodiment of the present application provides an apparatus for upgrading an intelligent model. The apparatus 300 includes:
a first acquiring module 301, configured to acquire input data belonging to a first domain, wherein the first domain is different from a second domain of a first intelligent model to be upgraded, and the first intelligent model is obtained through training based on first sample data which belongs to the second domain;
a second acquiring module 302, configured to input the input data to the first intelligent model, and acquire output data corresponding to the input data, wherein the output data is outputted by the first intelligent model from processing the input data, and the output data includes a confidence value and target box information; and
a training module 303, configured to train the first intelligent model according to the first sample data and the output data to obtain a second intelligent model.

Optionally, the training module 303 includes:
a setting unit, configured to set, according to the output data, annotation information in the input data corresponding to the output data, to obtain second sample data which belongs to the first domain, wherein the annotation information is used to indicate whether a target in each piece of the input data is a real target; and
a training unit, configured to train the first intelligent model according to the second sample data and the first sample data to obtain the second intelligent model.

Optionally, the setting unit is configured to:
calculate value scores of the output data according to the output data, wherein each of the value scores is used to indicate a degree of suitability of using a piece of the input data corresponding to a piece of the output data as a piece of the second sample data;
select, according to each of the value scores of the output data, output data meeting a preset condition from all the output data; and
set, according to the selected output data, annotation information in the input data corresponding to the selected output data.

Optionally, the apparatus 300 further includes:
a correction module, configured to display the second sample data, and in response to detecting a correction operation performed by a user on the annotation information in the second sample data, correct the annotation information according to the correction operation.

Optionally, the training unit is configured to:
train the first intelligent model according to the second sample data, the output data corresponding to the second sample data, and the first sample data to obtain the second intelligent model.

Optionally, the apparatus 300 further includes:
a receiving module, configured to receive input data sent by a second device and belonging to the first domain, wherein the input data is captured by the second device.

Optionally, the apparatus 300 further includes:
a sending module, configured to send the second intelligent model to a second device, such that the second device upgrades the first intelligent model installed in the second device to the second intelligent model.

In the embodiments of the present application, the second acquiring module acquires output data that is outputted by the first intelligent model from processing the input data belonging to the first domain, and the training module trains the first intelligent model training according to the first sample data and each piece of output data to obtain the second intelligent model. Therefore, the second intelligent model is applicable to the first domain, thus improving the domain generalization performance of the second intelligent model.

Specific manners of operations performed by the modules in the apparatus in the foregoing embodiment have been described in detail in the embodiments of the related method, and details are not described herein again.

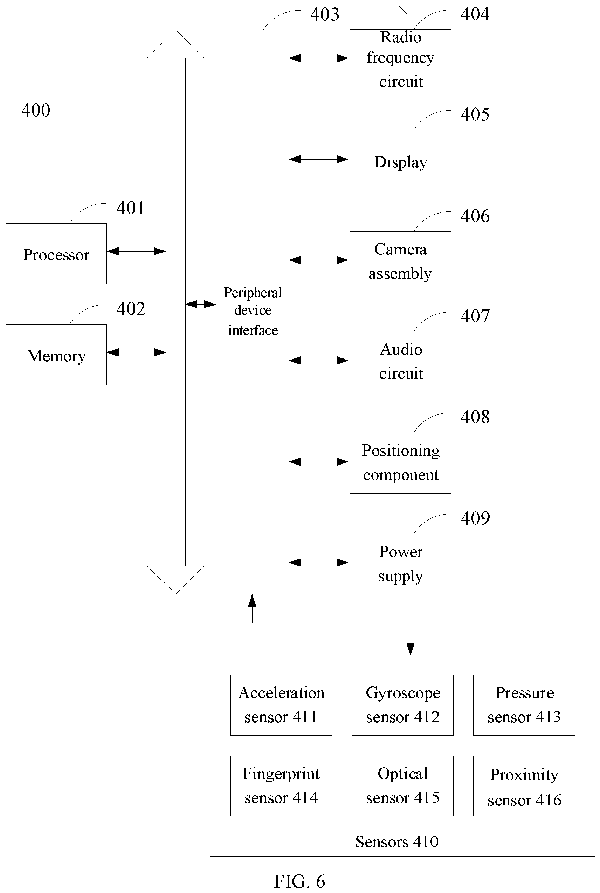

FIG. 6 is a structural block diagram of a terminal 400 according to an exemplary embodiment of the present application. The terminal 400 may be a portable mobile terminal, for example, a tablet computer, a notebook computer, or a desktop computer.

Generally, the terminal 400 includes a processor 401 and a memory 402.

The processor 401 may include one or more processing cores, for example, a 4-core processor or an 8-core processor. The processor 401 may be implemented by using at least one hardware form of digital signal processing (DSP), a field-programmable gate array (FPGA), and a programmable logic array (PLA). The processor 401 may alternatively include a main processor and a coprocessor. The main processor is configured to process data in an awake state, also referred to as a central processing unit (CPU), and the coprocessor is a low-power processor configured to process data in a standby state. In some embodiments, the processor 401 may be integrated with a graphics processing unit (GPU). The GPU is configured to be responsible for rendering and drawing content that a display needs to display. In some embodiments, the processor 401 may further include an artificial intelligence (AI) processor. The AI processor is configured to process computing operations related to machine learning.

The memory 402 may include one or more computer readable storage media, which may be non-transient. The memory 402 may further include a high-speed random access memory and a non-volatile memory such as one or more magnetic disk storage devices and a flash storage device. In some embodiments, the non-transitory computer readable storage medium in the memory 402 is configured to store at least one instruction. The at least one instruction is executed by the processor 401 to implement the method for upgrading an intelligent model provided in the method embodiment of the present application.

In some embodiments, the terminal 400 may further optionally include a peripheral device interface 403 and at least one peripheral device. The processor 401, the memory 402, and the peripheral device interface 403 may be connected through a bus or a signal cable. Each peripheral device may be connected to the peripheral device interface 403 through a bus, a signal cable, or a circuit board. Specifically, the peripheral device includes: at least one of a radio frequency circuit 404, a touch display 405, a camera assembly 406, an audio circuit 407, a positioning component 408, and a power supply 409.

The peripheral device interface 403 may be configured to connect at least one peripheral device related to input/output (I/O) to the processor 401 and the memory 402. In some embodiments, the processor 401, the memory 402, and the peripheral device interface 403 are integrated into the same chip or circuit board; in some other embodiments, any one or two of the processor 401, the memory 402, and the peripheral device interface 403 may be implemented on an independent chip or circuit board. This is not limited in this embodiment.

The radio frequency circuit 404 is configured to receive and transmit a radio frequency (RF) signal, also referred to as an electromagnetic signal. The radio frequency circuit 404 communicates with a communications network and another communications device by using the electromagnetic signal. The radio frequency circuit 404 may convert an electric signal into an electromagnetic signal for transmission, or convert a received electromagnetic signal into an electric signal. Optionally, the radio frequency circuit 404 includes: an antenna system, an RF transceiver, one or more amplifiers, a tuner, an oscillator, a digital signal processor, a codec chip set, a subscriber identity module card, and the like. The radio frequency circuit 404 may communicate with another terminal through at least one wireless communication protocol. The wireless communication protocol includes, but is not limited to: a metropolitan area network, generations of mobile communication networks (2G, 3G, 4G, and 5G), a wireless local area network and/or a wireless fidelity (Wi-Fi) network. In some embodiments, the radio frequency circuit 404 may further include a near field communication (NFC) related circuit, and is not limited in the present application.

The display 405 is configured to display a user interface (UI). The UI may include a graph, a text, an icon, a video, and any combination thereof. When the display 405 is a touch display, the display 405 is further capable of acquiring a touch signal on or above a surface of the display 405. The touch signal may be inputted to the processor 401 for processing as a control signal. In this case, the touch display 405 may be further configured to provide a virtual button and/or a virtual keyboard, which is also referred to as a soft button and/or a soft keyboard. In some embodiments, there may be one touch display 405, disposed on a front panel of the terminal 400. In some other embodiments, there may be at least two touch displays 405, disposed on different surfaces of the terminal 400 respectively or in a folded design. In still other embodiments, the touch display 405 may be a flexible display, disposed on a curved surface or a folded surface of the terminal 400. Even, the touch display 405 may be further set in a non-rectangular irregular pattern, namely, a special-shaped screen. The touch display 405 may be prepared by using materials such as a liquid crystal display (LCD), an organic light-emitting diode (OLED), or the like.

The camera assembly 406 is configured to acquire an image or a video. Optionally, the camera assembly 406 includes a front-facing camera and a rear-facing camera. Generally, the front-facing camera is disposed on a front panel of the terminal, and the rear-facing camera is disposed on a back surface of the terminal. In some embodiments, there are at least two rear-facing cameras, which are respectively any one of a main camera, a depth-of-field camera, a wide-angle camera, and a telephoto camera, to implement a background blurring function by fusing the main camera and the depth-of-field camera, and panoramic shooting and virtual reality (VR) shooting functions or other fusing shooting functions by fusing the main camera and the wide-angle camera. In some embodiments, the camera assembly 406 may further include a flash. The flash may be a single color temperature flash, or may be a double color temperature flash. The double color temperature flash is a combination of a warm light flash and a cold light flash, and may be used for light compensation under different color temperatures.

The audio circuit 407 may include a microphone and a speaker. The microphone is configured to collect sound waves of a user and an domain, and convert the sound waves into electric signals and input the electrical signals into the processor 401 for processing, or input the electrical signals into the radio frequency circuit 404 to implement voice communication. For the purpose of stereo sound collection or noise reduction, there may be a plurality of microphones, respectively disposed at different parts of the terminal 400. The microphone may be further an array microphone or an omnidirectional collection microphone. The speaker is configured to convert electric signals from the processor 401 or the radio frequency circuit 404 into sound waves. The speaker may be a conventional thin-film speaker or a piezoelectric ceramic speaker. In a case that the speaker is the piezoelectric ceramic speaker, electric signals not only can be converted into sound waves audible to human, but also can be converted into sound waves inaudible to human for ranging and other purposes. In some embodiments, the audio circuit 407 may further include an earphone jack.

The positioning component 408 is configured to position a current geographic location of the terminal 400, to implement navigation or a location based service (LBS). The positioning component 408 may be a positioning component based on the Global Positioning System (GPS) of the United States, the BeiDou system of China, or the GALILEO System of Russia.

The power supply 409 is configured to supply power for various components in the terminal 400. The power supply 409 may be an alternating current, a direct current, a disposable battery, or a rechargeable battery. When the power supply 409 includes the rechargeable battery, the rechargeable battery may be a wired rechargeable battery or a wireless rechargeable battery. The wired rechargeable battery is a battery charged through a wired circuit, and the wireless rechargeable battery is a battery charged through a wireless coil. The rechargeable battery may be further configured to support a fast charge technology.

In some embodiments, the terminal 400 further includes one or more sensors 410. The one or more sensors 410 include, but are not limited to: an acceleration sensor 411, a gyroscope sensor 412, a pressure sensor 413, a fingerprint sensor 414, an optical sensor 415, and a proximity sensor 416.

The acceleration sensor 411 may detect acceleration on three coordinate axes of a coordinate system established by the terminal 400. For example, the acceleration sensor 411 may be configured to detect components of gravity acceleration on the three coordinate axes. The processor 401 may control, according to a gravity acceleration signal collected by the acceleration sensor 411, the touch display 405 to display the user interface in a landscape view or a portrait view. The acceleration sensor 411 may be further configured to collect game or user motion data.

The gyroscope sensor 412 may detect a body direction and a rotation angle of the terminal 400. The gyroscope sensor 412 may cooperate with the acceleration sensor 411 to collect a 3D action performed by the user on the terminal 400. The processor 401 may implement the following functions according to the data collected by the gyroscope sensor 412: motion sensing (such as changing the UI according to a tilt operation of the user), image stabilization at shooting, game control, and inertial navigation.

The pressure sensor 413 may be disposed on a side frame of the terminal 400 and/or a lower layer of the display 405. When the pressure sensor 413 is disposed on the side frame of the terminal 400, a holding signal of the user on the terminal 400 may be detected. The processor 401 performs left and right hand recognition or a quick operation according to the holding signal collected by the pressure sensor 413. When the pressure sensor 413 is disposed on the lower layer of the touch display 405, the processor 401 controls an operable control on the UI according to a pressure operation of the user on the touch display 405. The operable control includes at least one of a button control, a scroll bar control, an icon control and a menu control.

The fingerprint sensor 414 is configured to collect a fingerprint of a user, and the processor 401 identifies an identity of the user according to the fingerprint collected by the fingerprint sensor 414, or the fingerprint sensor 414 identifies an identity of the user according to the collected fingerprint. When the identity of the user is identified as a trusted identity, the processor 401 authorizes the user to perform a related sensitive operation. The sensitive operation includes unlocking a screen, viewing encrypted information, downloading software, payment, changing settings, and the like. The fingerprint sensor 414 may be disposed on a front surface, a back surface, or a side surface of the terminal 400. When the terminal 400 is provided with a physical button or a vendor logo, the fingerprint sensor 414 may be integrated with the physical button or the vendor logo.

The optical sensor 415 is configured to collect ambient light intensity. In an embodiment, the processor 401 may control display brightness of the touch display 405 according to the ambient light intensity collected by the optical sensor 415. Specifically, when the ambient light intensity is relatively high, the display brightness of the touch display 405 is turned up. When the ambient light intensity is relatively low, the display brightness of the touch display 405 is turned down. In another embodiment, the processor 401 may further dynamically adjust a camera parameter of the camera assembly 406 according to the ambient light intensity collected by the optical sensor 415.

The proximity sensor 416, also referred to as a distance sensor, is usually disposed on the front panel of the terminal 400. The proximity sensor 416 is configured to collect a distance between a user and the front surface of the terminal 400. In an embodiment, when the proximity sensor 416 detects that the distance between the user and the front surface of the terminal 400 gradually becomes smaller, the touch display 405 is controlled by the processor 401 to switch from a screen-on state to a screen-off state. In a case that the proximity sensor 416 detects that the distance between the user and the front surface of the terminal 400 gradually becomes larger, the touch display 405 is controlled by the processor 401 to switch from the screen-off state to the screen-on state.

A person skilled in the art may understand that the structure shown in FIG. 6 does not constitute a limitation to the terminal 400, and the terminal may include more or fewer components than those shown in the figure, or some components may be combined, or a different component deployment may be used.

A person skilled in the art can easily think of other implementation solutions of the present disclosure after considering the specification and practicing the disclosure herein. The present application is intended to cover any variations, purposes or applicable changes of the present application. Such variations, purposes or applicable changes follow the general principle of the present application and include common knowledge or conventional technical means in the technical field which is not disclosed in the present application. The specification and embodiments are merely considered as illustrative, and the real scope and spirit of the present application are pointed out by the appended claims.

It should be noted that, the present application is not limited to the precise structures that have been described above and shown in the accompanying drawings, and can be modified and changed in many ways without departing from the scope of the present application. The scope of the present application is defined by the appended claims.

## Claims

1. A method for upgrading an intelligent model, applied to a first device, the method comprising:
acquiring input data belonging to a first domain, wherein the first domain is different from a second domain of a first intelligent model to be upgraded, and the first intelligent model is obtained through training based on first sample data which belongs to the second domain;
inputting the input data to the first intelligent model, and acquiring output data corresponding to the input data, wherein the output data is outputted by the first intelligent model from processing the input data, and the output data comprises a confidence value and target box information; and
training the first intelligent model according to the first sample data and the output data to obtain a second intelligent model.

2. The method according to claim 1, wherein training the first intelligent model according to the first sample data and the output data to obtain the second intelligent model comprises:
setting, according to the output data, annotation information in the input data corresponding to the output data, to obtain second sample data which belongs to the first domain, wherein the annotation information is used to indicate whether a target in each piece of the input data is a real target; and
training the first intelligent model according to the second sample data and the first sample data to obtain the second intelligent model.

3. The method according to claim 2, wherein setting, according to the output data, annotation information in the input data corresponding to the output data comprises:
calculating value scores of the output data according to the output data, wherein each of the value scores is used to indicate a degree of suitability of using a piece of the input data corresponding to a piece of the output data as a piece of the second sample data;
selecting, according to each of the value scores of the output data, output data meeting a preset condition from all the output data; and
setting, according to the selected output data, annotation information in the input data corresponding to the selected output data.

4. The method according to claim 2, after setting, according to the output data, annotation information in the input data corresponding to the output data, further comprising:
displaying the second sample data, and in response to detecting a correction operation performed by a user on the annotation information in the second sample data, correcting the annotation information according to the correction operation.

5. The method according to any one of claims 2 to 4, wherein training the first intelligent model according to the second sample data and the first sample data to obtain the second intelligent model comprises:
training the first intelligent model according to the second sample data, the output data corresponding to the second sample data, and the first sample data, to obtain the second intelligent model.

6. The method according to any one of claims 1 to 4, before the inputting the input data to the first intelligent model, further comprising:
receiving input data sent by a second device and belonging to the first domain, wherein the input data is captured by the second device.

7. The method according to any one of claims 1 to 4, after training the first intelligent model according to the first sample data and the output data to obtain a second intelligent model, further comprising:
sending the second intelligent model to a second device, such that the second device upgrades the first intelligent model installed in the second device to the second intelligent model.

8. An apparatus for upgrading an intelligent model, comprising:
a first acquiring module, configured to acquire input data belonging to a first domain, wherein the first domain is different from a second domain of a first intelligent model to be upgraded, and the first intelligent model is obtained through training based on first sample data which belongs to the second domain;
a second acquiring module, configured to input the input data to the first intelligent model, and acquire output data corresponding to the input data, wherein the output data is outputted by the first intelligent model from processing the input data, and the output data comprises a confidence value and target box information; and
a training module, configured to train the first intelligent model according to the first sample data and the output data to obtain a second intelligent model.

9. The apparatus according to claim 8, wherein the training module comprises:
a setting unit, configured to set, according to the output data, annotation information in the input data corresponding to the output data, to obtain second sample data which belongs to the first domain, wherein the annotation information is used to indicate whether a target in each piece of the input data is a real target; and
a training unit, configured to train the first intelligent model according to the second sample data and the first sample data to obtain the second intelligent model.

10. The apparatus according to claim 9, wherein the setting unit is configured to:
calculate value scores of the output data according to the output data, wherein each of the value scores is used to indicate a degree of suitability of using a piece of the input data corresponding to a piece of the output data as a piece of the second sample data;
select, according to each of the value scores of the output data, output data meeting a preset condition from all the output data; and
set, according to the selected output data, annotation information in the input data corresponding to the selected output data.

11. The apparatus according to claim 9, further comprising:
a correction module, configured to display the second sample data, and in response to detecting a correction operation performed by a user on the annotation information in the second sample data, correct the annotation information according to the correction operation.

12. The apparatus according to any one of claims 9 to 11, wherein the training unit is configured to:
train the first intelligent model according to the second sample data, the output data corresponding to the second sample data, and the first sample data to obtain the second intelligent model.

13. The apparatus according to any one of claims 8 to 11, further comprising:
a receiving module, configured to receive input data sent by a second device and belonging to the first domain, wherein the input data is captured by the second device.

14. The apparatus according to any one of claims 8 to 11, further comprising:
a sending module, configured to send the second intelligent model to a second device, such that the second device upgrades the first intelligent model installed in the second device to the second intelligent model.

15. An electronic device, comprising:
a processor; and
a memory configured to store instructions executable by the processor;
wherein the processor is configured to execute the executable instructions to implement the following operations:
acquiring input data belonging to a first domain, wherein the first domain is different from a second domain of a first intelligent model to be upgraded, and the first intelligent model is obtained through training based on first sample data which belongs to the second domain;
inputting the input data to the first intelligent model, and acquiring output data corresponding to the input data, wherein the output data is outputted by the first intelligent model from processing the input data, and the output data comprises a confidence value and target box information; and
training the first intelligent model according to the first sample data and the output data to obtain a second intelligent model.

16. A computer readable storage medium, storing a computer program, wherein the computer program is loaded and executed by a processor to implement the following operations:
acquiring input data belonging to a first domain, wherein the first domain is different from a second domain of a first intelligent model to be upgraded, and the first intelligent model is obtained through training based on first sample data which belongs to the second domain;
inputting the input data to the first intelligent model, and acquiring output data corresponding to the input data, wherein the output data is outputted by the first intelligent model from processing the input data, and the output data comprises a confidence value and target box information; and
training the first intelligent model according to the first sample data and the output data to obtain a second intelligent model.
